# EUROPÄISCHE PATENTSCHRIFT

(11) **EP 0 617 848 B1**
(45) Veröffentlichungstag und Bekanntmachung des Hinweises auf die Patenterteilung: **30.08.1995**
(21) Anmeldenummer: 92924482.0
(22) Anmeldetag: 17.12.1992
(51) Int. Cl.: H01M 12/08, H01M 10/42

(54) **VERFAHREN ZUR GEZIELTEN ELEKTROCHEMISCHEN UMSETZUNG IN WIEDERAUFLADBAREN BATTERIEN**
APPROPRIATE ELECTROCHEMICAL CONVERSION PROCESS FOR RECHARGEABLE BATTERIES
PROCEDE DE CONVERSION ELECTROCHIMIQUE APPROPRIEE POUR BATTERIES RECHARGEABLES

(30) Priorität: 18.12.1991 AT 2505/91
(43) Veröffentlichungstag der Anmeldung: 05.10.1994
(73) Patentinhaber: ELIN ENERGIEANWENDUNG GESELLSCHAFT M.B.H., A-1141 Wien (AT)
(72) Erfinder: TOMAZIC, Gerd, A-8680 Mürzzuschlag (AT)
(74) Vertreter: Krause, Peter
(86) Internationale Anmeldenummer: AT9200168
(87) Internationale Veröffentlichungsnummer: WO9312555

(56) Entgegenhaltungen:
- EP-A- 0 165 000
- EP-A- 0 343 144
- EP-A- 0 411 614
- US-A- 4 677 039

## Beschreibung

### Verfahren zur gezielten elektrochemischen Umsetzung in wiederaufladbaren Batterien.

Die Erfindung bezieht sich auf ein Verfahren zur gezielten elektrochemischen Umsetzung in wiederaufladbaren Batterien.

Die Speicherung von Energie in ihren vielfältigen Erscheinungsformen ist eine in der Technik vorrangige Problemstellung.

Thermische Energie kann durch Wärmespeicher, die Temperaturen über oder unter der Normaltemperatur aufweisen, ermöglicht werden. Hiebei ist es erforderlich, daß diese Energiespeicher Vorratsbehälter mit thermischer Isolierung aufweisen.

Zur Speicherung von thermischer Energie können auch Latentwärmespeicher dienen, wobei in diesem Falle chemische Elemente oder auch Verbindungen kurz über oder unter ihrer Umwandlungstemperatur thermisch isoliert gegenüber ihrer Umgebung gelagert werden und mit Über- oder Unterschreiten einer Grenztemperatur ein zusätzlicher Überschuß bzw. Unterschuß an Wärmeenergie frei wird, sodaß entweder eine Absenkung oder Erhöhung der Temperatur von Medien über die Umgebungstemperatur durchgeführt wird.

Eine weitere bekannte Möglichkeit Energien zu speichern besteht darin, daß kinetische Energie durch Anhebung der potentiellen Energie von energiespeichernden Medien ermöglicht wird. Als typische Beispiele seien hiefür Speicherkraftwerke, insbesondere Pumpspeicherkraftwerke, genannt, wobei in Zeiten von Überschuß an elektrischer Energie mit dieser Wasser von einer potentiell niedrigeren Energiestufe in eine potentiell höhere Energiestufe gehoben werden. Dieser potentielle Unterschied wird üblicherweise durch Hochpumpen von Wasser von einer niedrigeren See-Höhe in eine höhere See-Ebene verwirklicht, sodaß in Bedarfszeiten für Energie die potentielle Energie des Wassers in elektrische Energie durch Umwandlung mit Turbinen und Generatoren zur Verfügung gestellt werden kann.

Die Speicherung einer der in ihrer Umwandlung in Licht und insbesondere in Wärme mit einem hohen Nutzungsgrad basierenden Energie und zwar der elektrischen Energie, ist bislang zwar theoretisch besonders vorteilhaft ermöglicht worden, wobei großtechnische Umsetzungen auf eine hohe Anzahl von Schwierigkeiten in der Umsetzung stoßen. So ist beispielsweise die Umsetzung der elektrischen Energie durch Elektrolyse von Wasser zu Wasserstoff und Sauerstoff, Speicherung in dieser Form und Gewinnung von elektrischer Energie durch Brennstoffelemente, in welchen eine Rekombination von Wasserstoff und Sauerstoff stattfindet, bislang in großtechnischem Maßstab nicht mit dem entsprechenden Wirkungsgrad möglich gewesen. Auch andere Umsetzungen mit entsprechenden Paarungen, wie beispielsweise Natrium und Schwefel, scheitern im großtechnischen Maßstab bislang darin, daß entweder hohe Temperaturen erforderlich sind, um die entsprechende Energiedichte und damit Stromausbeute zu erreichen oder daß die entsprechenden Einrichtungen aufgrund ihrer Betriebsbedingungen, z.B. erhöhte Temperatur, lediglich geringe Standzeiten bzw. Wirkungsgrade ermöglichen.

Auch elektrochemische Energiespeicher weisen den Nachteil auf, daß einerseits ihr Speichervermögen relativ gering ist bzw. daß während der Speicherung, insbesondere bei mehrzelligen Batterien oder Speichern, nur schwer kontrollierbare chemische und elektrochemische Entladungsvorgänge ablaufen.

Bei der Speicherung von elektrochemischer Energie kann prinzipiell zwischen zwei verschiedenen Speichertypen unterschieden werden. Bei einer Speichertype wird in bzw. an der Elektrode gegebenenfalls bipolare Elektrode das in seiner potentiellen Energie angehobene chemische Element bzw. chemische Verbindung gelagert. Eine andere Form besteht darin, daß eine oder auch beide elektrochemisch wirksamen Elemente bzw. Stoffe nicht an oder in der Elektrode, sondern in einem eigenen Speicher gelagert werden, wobei zum Transport der fluide Elektrolyt dient und die Speicherung in den Vorratsbehältern für die anodisch und kathodisch wirksame Substanz erfolgt. Eine besonders vorteilhafte Speicherung von elektrischer Energie mit umlaufenden Elektrolyten besteht darin, daß die auf der Kathode wirksame Substanz, also ein Metall an der kathodischen Oberfläche der Elektrode abgeschieden wird,z.B. daß eine Zinkschichte abgeschieden wird, und daß das an der Anode abgeschiedene Element in einen Speicher abgeleitet wird, wobei für eine gleichmäßige Aktivität dieses Elementes über einen nur bedingt in den Elektrolyten z.B. wässrigen Elektrolyten lösbaren Komplex, z.B. Ammoniumkomplex für das Brommolekül,ermöglicht ist.

Die prinzipiellen Möglichkeiten zur Speicherung von Energie sind seit langem bekannt, wobei lediglich die Frage des Wirkungsgrades und der Standzeit der entsprechenden elektrochemischen Speicher ihrem breiten Einsatz hinderlich entgegenstehen.

Ein Phänomen der elektrochemischen Speicher, dem, obwohl hinläufig bekannt, zuwenig Beachtung geschenkt wird ist der Verlust an potentieller chemischer Energie während des Stillstandes.

So ist beispielsweise aus der EP 0168377 A1 bekannt, bei einer Zink-Brom-Batterie mit umlaufenden Elektrolyten die vagabundierenden Ströme, welche zwischen den einzelnen Halbzellen laufen, während des Stillstandes also während der Periode in welcher weder Strom abgezogen noch der Batterie zugeführt wird, dadurch zu verhindern, daß die elektrischen Verbindungen zweiter Klasse unterbunden werden. Dieses Unterbinden kann durch Unterbrechung der Zuläufe und Abläufe des Elektrolyten in den einzelnen Anoden- bzw. Kathodenräume ermöglicht werden, wobei hier entweder Absperrorgane oder auch entsprechende Anordnung der Verbindungen und damit Belüftung während der Stillstand des Elektrolyten in den Leitungen erreichbar ist oder auch durch Ersatz des Elektrolyten und dgl. ermöglicht werden.

Der Verlust von potentieller chemischer bzw. elektrischer Energie kann jedoch nicht nur durch Stromleitung über die Zu- und Ableitung der Elektrolyt-Flüssigkeiten erfolgen, sondern es besteht auch die Möglichkeit, daß die einzelnen Zellen zum homogenen Ladungsausgleich untereinander für die gegenseitige Auf- und Entladung Sorge tragen bzw., daß z.B. bei parallel geschaltenen Batterien oder Zellenpaketen, die beispielsweise mehrere in Serie geschaltete Elektroden, insbesondere bipolare, Elektroden aufweisen, ein gegenseitiges Be- und Entladen stattfindet.

Dieser Ladevorgang kann, was bislang nicht bekannt war, unter Mitwirkung der Diaphragmen soweit führen, daß auch an der Anode das kathodisch abzuscheidende Metall abgeschieden wird, womit nach einer Stillstandsperiode einer Batterie eine Stromentnahme praktisch unmöglich wird, da beispielsweise der Zinkfilm an der Anode, an welcher er sich nicht befinden sollte, vorerst aufgelöst werden muß, um überhaupt zu einer aktionsfähigen Halbzelle zu führen.

Aus der EP 0434659 A2 wird ein Verfahren zur gezielten elektrochemischen Umsetzung in galvanischen Zellen, insbesondere einer Zink-Brom-Batterie,bekannt, bei welcher zur besseren energetischen Nutzung beim Laden Zellenpakete bzw. Batterien parallel geschaltet sind und während des Entladens, also der Stromentnahme, ein Umschalten in Serie erfolgt.

Die vorliegende Erfindung hat sich zum Ziel gesetzt, ein Verfahren zur gezielten elektrochemischen Umsetzung in wiederaufladbaren Batterien und/oder Zellenpaketen, insbesondere mit Zink-Brom-Zellen, zu schaffen, das auch während der Stillstandszeiten, also jenen Zeitperioden, in welchen die Batterie lediglich in Bereitschaft steht, keinen unnötigen Verlust an Energie verursacht und eine Umpolung von Zellen, insbesondere einer anodischen Zelle zu einer kathodischen Zelle,vermeidet.

Das erfindungsgemäße Verfahren zur gezielten elektrochemischen Umsetzung in wiederaufladbaren Batterien und/oder Zellenpaketen, insbesondere mit Zink-Brom-Zellen, mit umlaufenden z.B. umgepumpten Elektrolyten, in Serie geschaltenen bipolaren Elektroden, zwischen diesen angeordneten Diaphragmen und damit gebildeten Anolyt- bzw. Katolyträumen, die jeweils zumindest teilweise in Parallelschaltung von den entsprechenden Elektrolyten durchflossen werden, wobei elektrisch betreibbare Arbeitsmittel z.B. Motoren für den mobilen Einsatz und elektrische Steuer- und/oder Kontrollorgane an die Batterie geschaltet werden, besteht im wesentlichen darin, daß bei nicht umlaufenden (m) Elektrolyt (en) bei elektrisch abgeschaltetem Arbeitsmittel die Steuer- und/oder Kontrollorgane ebenfalls abgeschaltet werden und/oder daß bei nicht umlaufenden (m) Elektrolyt (en) und elektrisch abgeschaltenen Arbeitsmittel die Batterie und/oder Zellenpakete zumindest teilweise geladen wird (werden). Wiederaufladbare Batterien mit umlaufenden Elektrolyten, wobei die Elektrodenräume zumindest teilweise in Parallelschaltung angespeist werden, haben den Vorteil, daß der Elektrolyt in gleicher Konzentration zu allen Elektroden geführt wird, wobei durch den umlaufenden Elektrolyten die Speichermenge von zumindest einem elektrochemisch wirksamen Element bzw. wirksamer Verbindung nicht durch die Elektrodenoberfläche oder den Anoden- bzw. Kathodenraum begrenzt ist. Bei Stromverbrauch wird sowohl der Anolyt, als auch der Katolyt in Umlauf gehalten, sodaß es beispielsweise nicht zu Zinkabscheidungen an der Anode kommen kann. Wird das Arbeitsmittel, z.B. ein Elektromotor oder dgl., abgeschaltet, so wird in der Regel gleichzeitig der Umlauf der Elektrolyten unterbrochen, wobei es allerdings, wenn Steuer- oder Kontrollorgane an einer Batterie weiterhin anliegen, aufgrund von geringsten Unterschieden in der Konzentration der Elektrolyten oder auch in der Geometrie der einzelnen Zellen zu Umladungen kommen kann. Ist auch selbst die geringste Stromentnahme, wie sie durch Steuer- und/oder Kontrollorgane bedingt ist, vermieden, so können derartige Umladungen vermieden werden. Eine weitere Möglichkeit besteht darin, daß bei nicht umlaufenden (m) Elektrolyten die Batterie und/oder Zellenpakete zumindest teilweise geladen werden, sodaß z.B. beginnende Zinkabscheidungen auf der Anodenoberfläche durch das bei der Ladung entstehende elementare Brom oder dgl. aufgelöst bzw. die Zinkabscheidung an sich vermieden wird.

Eine weitere Möglichkeit,stärkere Ablagerung von metallischen Schichten an der anodischen Oberfläche zu vermeiden, besteht darin, daß der das oxidierte Anion, insbesondere Brom, enthaltende Elektrolyt auch bei abgeschalteten Arbeitsmittel zeitweise in Umlauf gebracht wird. Dadurch kann wenn auch mit einem schlechteren Wirkungsgrad eine größere Abscheidung von Kathionen auf der Anode vermieden werden.

Zur Steuerung der elektrochemischen Vorgänge und zwar sowohl während der Betriebs- als auch während der Stillstandphase können unterschiedliche Drücke im Anolyt- und Katolyt-Kreislauf aufgebaut werden. Durch diese Vorgangsweise kann entweder erreicht werden, daß die elektrochemisch wirksamen Kationen bzw. Anionen aber auch ihre oxidierten bzw. reduzierten Formen in den jeweils anderen Elektrodenraum gelangen, sodaß dadurch entweder unerwünschte Ablagerungen aufgelöst werden können oder auch zur Steigerung der Kapazität eine Verdünnung der elektrochemisch wirksamen Substanzen erreicht werden kann.

Eine besonders einfache Maßnahme zur Steuerung des Druckes besteht darin, daß der maximale Druck im Anolyt- und/oder Katolyt-Kreislauf gesteuert wird, sodaß unerwünschte Druckspitzen und übermäßige Diffusionsvorgänge verhindert werden, wobei gleichzeitig auch Überdrucke in den einzelnen Elektrodenräumen, die beispielsweise durch Kunststoff-Diaphragmen aus Polyäthylen und Elektroden, die mit Kunststoff gebundenen Kohlenstoff aufgebaut sind, vermieden werden.

Die Steuerung des Druckes im Anolyt- und/oder Katolyt-Kreislauf kann auch durch Steuerung der Drehgeschwindigkeit der Pumpen bzw. der Antriebsmittel derselben erfolgen, wobei dann zu jedem erwünschten Zeitpunkt eine bestimmte Druckdifferenz oder auch gleicher Druck aufrecht erhalten werden kann.

Eine weitere Möglichkeit zur Steuerung des Druckes in einem oder beiden Elektrolyt-Kreisläufen kann durch Strömungsdrosseln, insbesondere in den Leitungen, gesteuert werden. Diese Drosseln sorgen weiters für eine besonders gute Durchmischung innerhalb der Elektrolyten und zwar auch im normalen Betriebsfall.

Wird für den Stillstand der Arbeitsmittel bei elektrisch parallel zueinander geschalteten Batterien und/oder Zellenpaketen die elektrische Verbindung zumindest teilweise unterbrochen und für den Betrieb der Arbeitsmittel die/der Stromkreis(e) wieder geschlossen, so wird selbst die Umladung zwischen den Batterien bzw. Zellenpaketen vermieden,wobei auch eine unerwünschte kathodische Abscheidung an der Anode sicher vermieden werden kann.

Wird für den Stillstand der Arbeitsmittel in den Anolyträumen, ein an elektrochemisch aktivem Element, Molekül und/oder Verbindung, insbesondere bromarmer Elektrolyt, eingebracht, so wird selbst in der Anfangsphase eine unerwünschte Abscheidung vermieden, wobei gleichzeitig zu hohe Kapazitätsverluste durch stille elektrische Entladungen ebenfalls vermieden sind.

Wird für den Stillstand der Arbeitsmittel die elektrische Verbindung über die Elektrolyt-Zuleitungen und/oder -Ableitungen unterbrochen, so sind elektrochemische Umsetzungen, die über die Stromleitung der Elektrolyt-Zu- und -Ableitungen verursacht werden, sicher vermieden, sodaß eine zusätzliche Minimierung der Energieverluste beim Stillstand der Batterie möglich wird.

Im folgenden wird die Erfindung an Hand der Zeichnungen näher erläutert.

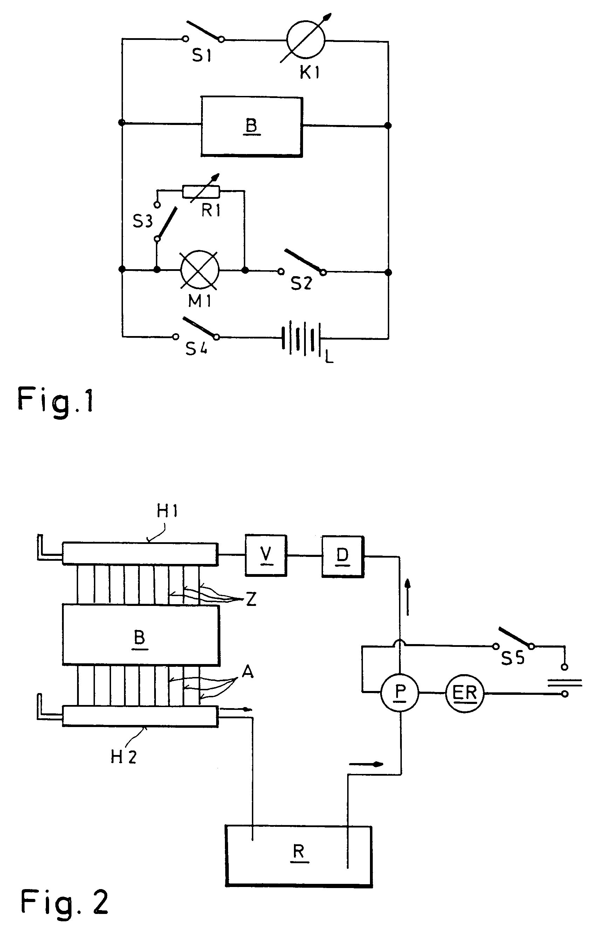

Es zeigen Fig. 1 eine elektrische Schaltung und Fig. 2 eine hydraulische Schaltung einer Batterie mit umlaufenden Elektrolyten.

Bei der in Fig. 1 dargestellten elektrischen Schaltung bedeutet B eine Zink-Brom-Batterie mit einer Maximalspannung von 216 V und einer Gesamtkapazität von 22 kWh. Diese Batterie ist mit einer Vielzahl von bipolaren Elektroden aufgebaut, die mit Kunststoff gebundenen Kohlenstoff aufgebaut sind und einen Rand aus nichtleitendem Kunststoff aufweisen. Als Kunststoff haben sich hiebei paraffinische Kunststoffe, insbesondere Polyäthylen,bewährt. Zwischen den Elektroden sind Diaphragmen angeordnet, durch welche Anolyt- und Katolyträume gebildet werden. Als elektrochemisch wirksame Paarung ist Zink und Brom vorgesehen, wobei beim Ladevorgang an der Kathode Zink zur Abscheidung kommt und an der Anode molekulares Brom abgeschieden wird. Um eine entsprechende Dimensionierung der Elektrodenräume vorsehen zu können, wird das Brom in einem Komplexbildner gebunden. Der Komplexbildner als solcher ist wasserlöslich, wohingegen der Bromkomplex nur eine geringe Löslichkeit im Elektrolyten aufweist, sodaß während des Ladens eine Suspension entsteht die abgepumpt wird. Die Aktivität des Broms ist von der Löslichkeit des Komplexes im wässrigen Elektrolyten und auch durch das Angebot an öliger Phase an der Elektrode bestimmt. Für einen längerfristigen Betrieb der Batterie muß sowohl der Katolyt als auch der Anolyt in Umlauf gehalten werden, damit einerseits z.B. beim Entladungsvorgang Brom zur Elektrode gebracht wird und das in Lösung gehende Zink aus dem Elektrodenraum abgeleitet werden kann. Die Batterie B weist an ihren Enden sowohl zur Ab- als auch zur Zuleitung von Strom Sammelelektroden auf. Zur Kontrolle des Batterie-Ladezustandes ist ein Kontrollorgan K 1 vorgesehen, das bei geschlossenen Schalter S 1 einen Stromverbrauch von 10 mA aufweist. An der Batterie ist weiters ein Verbraucher M geschaltet, wobei der Stromkreis über den Schalter S 2 geschlossen und geöffnet werden kann. Parallel zum Verbraucher M 1 ist ein Regelorgan R 1 zur Steuerung der Leistungsaufnahme des Verbrauchers geschalten, wobei ein Zu- und Abschalten des Regelorganes über den Schalter S 3 möglich ist. Über den Schalter S 4 kann eine Ladestromquelle L zu- und abgeschalten werden.

Bei dem in Fig. 2 dargestellten hydraulischen Schaltschema ist lediglich ein Kreislauf eines Elektrolyten dargestellt, wohingegen für den weiteren Elektrolyten ein analoger hydraulischer Kreislauf vorgesehen ist. Es besteht auch die Möglichkeit, daß eine Batterie zwei oder mehrgeteilt ist, wobei dann auch mehrere hydraulische Kreisläufe vorhanden sein können.

Es liegen dann auch in Serie geschaltete Zellenpakete vor oder es können auch zwischen den beiden Endelektroden eigene Ableitungen vorgesehen sein, sodaß beispielsweise unterschiedliche Spannungen von einer Batterie abgegriffen werden können.

Die Batterie B weist ein Reservoir R für den Elektrolyten auf. Im Falle der Zink-Brom-Batterie sind in diesem Reservoir zwei Flüssigkeiten, und zwar der schwerere Bromkomplex, der mit einer quarternären Ammoniumbase gebildet ist und der verbliebene wässrige Elektrolyt angeordnet. Beim Ansaugen zur Entladung der Batterie wird über eine geeignete Mischvorrichtung, die nicht dargestellt ist, eine flüssig/flüssig Suspension über die Pumpe P angesaugt. Die Pumpe, welche über einen Schalter S 5 zu-und abschaltbar ist, weist eine elektronische Regelung ER auf, mit welcher die Förderleistung der Pumpe und damit der Druck geregelt werden kann. Zusätzlich oder auch anstelle der elektronischen Regelung kann eine Drossel D, welche gleichzeitig als statisches Mischorgan dient, vorgesehen sein, wobei entweder lediglich in einem Elektrolyt-Kreislauf eine derartige Drossel vorgesehen ist oder falls erwünscht, in beiden Elektrolyt-Kreisläufen eine Drossel angeordnet sein kann, wobei dann, um erwünschten Druckunterschieden Rechnung zu tragen, beispielsweise die Drossel im Brom-Kreislauf einen geringeren freien Strömungsquerschnitt aufweist, sodaß eine Druckabsenkung im Brom-Kreislauf erreicht werden kann. Durch diese Vorgangsweise wird erreicht, daß während des Betriebes die Diffusion von Brom aus dem Anolytraum in den Katolytraum möglichst gering gehalten wird. Zusätzlich und auch anstelle von elektronischer Regelung und Drossel kann ein Überdruckventil vorgesehen sein. Durch entsprechende Einstellung des Maximaldruckes können auch unterschiedliche Arbeitsdrücke aufrecht erhalten werden, wobei das Überdruckventil V über eine eigene Leitung (nicht dargestellt) in ein Auffanggefäß entleert, das seinerseits über einen Druckausgleich mit dem Reservoir verbunden ist. Durch verschieden hohe maximale Drücke ist somit auch hier eine Druckdifferenz zwischen den beiden Elektrolyt-Kreisläufen besonders einfach realisierbar. So ist beispielsweise ein Druck von 45 N/cm² im Katolyt und von 50 N/cm² im Anolyt wünschenswert, wobei durch diesen geringfügigen Druckunterschied es lediglich zu geringfügigen zulässigen Belastungen der Diaphragmen und Elektroden kommt. Der Elektrolyt gelangt sodann in den Hahn H1, in welchem eine Aufteilung des Stromes in die einzelnen Zuleitungen, die in die Elektrodenräume münden erfolgt. Aus den Elektrodenräumen werden über die Ableitungen A die einzelnen Elektrolytströme wieder im Hahn H2 gesammelt und in das Reservoir R rückgeführt. Die beiden Hähne H1 und H2 verfügen über Kücken (nicht dargestellt) durch welche sowohl die hydraulische als auch die elektrische Verbindung 2. Klasse zwischen den einzelnen Elektrodenräumen unterbunden werden kann. Gleichzeitig werden dadurch vagabundierende Ströme zwischen den einzelnen Zellen unterbunden, womit eine Verringerung der Kapazität während des Stillstandes der Batterie ebenfalls geringer wird. Zur Kompensation der vagabundierenden Ströme während des Betriebes der Batterie können entlang des Verbindungskanals des Kückens eine Gegenspannung aufgebracht werden, welche die vagabundierenden Ströme kompensiert.

Beispiel 1: Die weiter oben geschriebene Zink-Brom-Batterie mit einer Maximalspannung von 216 V und bei vollständiger Ladung mit einer Kapazität von 22 kWh wurde lediglich über das Kontrollorgan K 1 mit einer Stromentnahme von 10 mA belastet. Nach 60 Stunden war das Zink der Kathoden in erheblichem Ausmaß an die Anoden umgeladen. Die noch vorhandene Kapazität war 64 Ah. Dieser Wert liegt wesentlich unterhalb der Kapazität, welche die Batterie aufgrund des Verbrauches des Kontrollorganes K1 aufweisen sollte. Die Batterie wurde sodann quer zur Elektrodenerstreckung geteilt und es zeigte sich, daß bis auf die Elektroden Nr. 5, 6, und 7 alle anderen Elektroden beidseitig mit einem zwar nicht vollkommen überdeckenden Zinkbelag versehen waren.

Beispiel 2: Es wurde analog Beispiel 1 verfahren, wobei in Abständen von 2 Stunden jeweils kurze Ladestromimpulse der Batterie zugeführt wurden. Nach 60 Stunden wurde die Kapazität der Batterie bestimmt und sie hatte 95 Ah. Die Kapazität der Batterie war somit gegenüber jener im Beispiel 1 um 31 Ah höher obwohl lediglich 0,6 Ah an Ladestrom zugeführt wurden. Sowohl in Bsp.1 als auch in Bsp.2 und folgenden ist während der Abschaltung des Verbrauchers kein Umlauf des Elektrolyten erfolgt. Weiters wurden die Hähne jeweils geschlossen, sodaß Stromverluste durch vagabundierende Ströme vermieden waren.

Beispiel 3: Es wurden zwei Batterien gemäß Beispiel 1 parallel geschalten wobei eine Batterie eine geringere Kapazität als die andere aufwies, sodaß die erste Batterie als Verbraucher für die zweite Batterie zu betrachten war. Die Kapazität beider Batterien sank nach 48 Stunden auf 12 % des Ausgangswertes.

Beispiel 4: Die parallel geschalteten Batterien gemäß Beispiel 3 mit einem angeschlossenen Kontrollorgan 1 mit einem Stromverbrauch von 20 mA. Die Kapazitätsabnahme nach 60 Stunden betrug 82 %. Es war somit eine stärkere Kapazitätsabnahme zu beobachten als es alleine durch den Stromverbrauch des Kontrollorganes zu erklären ist.

Beispiel 5: Es wurde die Anordnung gemäß Beispiel 3 mit kurzfristigen Stromladungen versehen und die Kapazität der Batterie betrug nach 60 Stunden 88 % d.h. die Differenz der unterschiedlichen Kapazitäten ist nicht auf die Energiezufuhr durch den Ladestrom zurückzuführen, sondern muß eine weitere Erklärung finden.

Beispiel 6: Es wurde die Anordnung gemäß Beispiel 3 mit einer Dauerstromladung von 5 mA versehen,und die Kapazität der Batterie betrug nach 48 Stunden 93 % der Ausgangskapazität. Auch hier kann die geringe Lademenge die große Differenz nicht erklären.

Anstelle von Stromladungen kann auch die zeitweise Zufuhr von bromhältigen Elektrolyten erfolgen, wobei das Absaugen aus dem Reservoir so erfolgt, daß nicht eine Suspension sondern lediglich der wässrige Elektrolyt,der im geringen Maß Zink-Brom-Komplex gelöst enthält den Anodenräumen zugeführt wird. Auch mit dieser Vorgangsweise ist eine gemäß den vorstehenden Beispielen angeführte ähnliche Kapazitätsbeibehaltung erreichbar gewesen.

## Patentansprüche

1. Verfahren zur gezielten elektrochemischen Umsetzung in wiederaufladbaren Batterien und/oder Zellenpaketen, insbesondere mit Zink/Bromzellen, mit umlaufenden, z.B. umgepumpten Elektrolyten, in Serie geschaltenen bipolaren Elektroden, zwischen diesen angeordneten Diaphragmen und damit gebildeten Anolyt- bzw. Katolyträumen, die jeweils zumindest teilweise in Parallelschaltung von den entsprechenden Elektrolyten durchflossen werden, wobei elektrisch betreibbare Arbeitsmittel, z.B. Motoren für den mobilen Einsatz und elektrische Steuer- und/oder Kontrollorgane an die Batterie geschalten werden, dadurch gekennzeichnet, daß bei nicht umlaufenden (m) Elektrolyt (en) bei elektrisch abgeschaltenen Arbeitsmittel die Steuer- und/oder Kontrollorgane ebenfalls abgeschaltet werden und/oder daß bei nicht umlaufenden (m) Elektrolyt (en) und bei elektrisch abgeschaltenen Arbeitsmittel die Batterie und/oder Zellenpakete zumindest zeitweise geladen wird/werden.

2. Verfahren nach Anspruch 1, dadurch gekennzeichnet, daß der das oxidierte Anion, insbesondere Brom, enthaltende Elektrolyt zeitweise auch bei abgeschaltenen Arbeitsmittel in Umlauf gebracht wird.

3. Verfahren nach Anspruch 1 oder 2, dadurch gekennzeichnet, daß unterschiedliche Drücke im Anolyt- und Katolyt-Kreislauf aufgebaut werden.

4. Verfahren nach Anspruch 1,2 oder 3, dadurch gekennzeichnet, daß der maximale Druck im Anolyt- und/oder Katolyt-Kreislauf gesteuert wird.

5. Verfahren nach einem der Ansprüche 1 bis 4, dadurch gekennzeichnet, daß der Druck im Anolyt- und/oder Katolyt-Kreislauf durch Steuerung der Drehgeschwindigkeit von Pumpen bzw. Arbeitsmittel derselben erfolgt.

6. Verfahren nach einem der Ansprüche 1 bis 5, dadurch gekennzeichnet, daß der Druck des/der Elektrolyt-Kreisläuf(e) durch Strömungsdrosseln, welche gegebenenfalls gleichzeitig als statisches Mischorgan dienen, in den Leitungen gesteuert wird.

7. Verfahren nach einem der Ansprüche 1 bis 6, dadurch gekennzeichnet, daß für den Stillstand der Arbeitsmittel bei elektrisch parallel zueinander geschaltenen Batterien und/ oder Zellenpaketen die elektrische Verbindung zumindest teilweise unterbrochen wird und für den Betrieb der Arbeitsmittel die/der Stromkreis (e) wieder geschlossen wird.

8. Verfahren nach einem der Ansprüche 1 bis 7, dadurch gekennzeichnet, daß für den Stillstand der Arbeitsmittel in den Anolyträumen ein arm an elektrochemisch aktivem Element, Molekül und/oder Verbindung, insbesondere bromarmer, Elektrolyt eingebracht wird.

9. Verfahren nach einem der Ansprüche 1 bis 8, dadurch gekennzeichnet, daß für den Stillstand der Arbeitsmittel die elektrische Verbindung der Elektrolyträume über die Elektrolytzu- und Ableitungen unterbrochen wird.

## Claims

1. A process for a purposive electrochemical conversion in rechargeable batteries and/or cell bundles, in particular comprising zinc/bromine cells, with circulating, e.g. pumped electrolytes, series-connected bipolar electrodes, diaphragms arranged between the latter, and thus formed anolyte- and catholyte chambers which, in each case at least partially connected in parallel, are traversed by the corresponding electrolytes, where electrically operable operating means, e.g. motors for mobile use, and electrical control- and/or monitoring elements are connected to the battery, characterised in that when the electrolyte(s) is(are) not circulating and when the operating means are electrically disconnected the control- and/or monitoring elements are likewise disconnected and/or when the electrolyte(s) is(are) not circulating and when the operating means are electrically disconnected the battery and/or cell bundles is/are at least periodically charged.

2. A process as claimed in Claim 1, characterised in that the electrolyte containing the oxidized anion, in particular bromine, is periodically circulated also when the operating means are disconnected.

3. A process as claimed in Claim 1 or 2, characterised in that different pressures are built up in the anolyte- and catholyte cycle.

4. A process as claimed in Claim 1, 2 or 3, characterised in that the maximum pressure in the anolyte- and/or catholyte cycle is controlled.

5. A process as claimed in one of Claims 1 to 4, characterised in that the pressure in the anolyte- and/or catholyte cycle is controlled by controlling the rotation speed of pumps and operating means.

6. A process as claimed in one of Claims 1 to 5, characterised in that the pressure of the electrolyte cycle(s) is controlled by flow restrictors, which optionally simultaneously serve as static mixing element, in the pipelines.

7. A process as claimed in one of Claims 1 to 6, characterised in that for the rest state of the operating means, with the batteries and/or cell bundles electrically connected in parallel, the electrical connection is at least partially interrupted, and for the operation of the operating means the circuit(s) is/are closed again.

8. A process as claimed in one of Claims 1 to 7, characterised in that for the rest state of the operating means an electrolyte low in the electrochemically active element, molecule and/or compound, in particular low in bromine, is introduced into the anolyte chambers.

9. A process as claimed in one of Claims 1 to 8, characterised in that for the rest state of the operating means the electrical connection between the electrolyte chambers via the electrolyte supply- and discharge pipelines is interrupted.

## Revendications

1. Procédé de conversion électrochimique appropéie, dans des batteries et/ou des paquets de cellules rechargeables, en particulier avec des cellules zinc/brome, avec une circulation d'électrolytes, obtenue par exemple par un pompage de mise en circulation, des électrodes bipolaires branchées en séries, des diaphragmes disposés entre ces électrodes et des espaces d'anolyte, respectivement de catholyte ainsi constitués, parcourus chacun au moins partiellement selon un circuit parallèle, par un écoulement d'électrolytes correspondant, des moyens de travail à possibilité de fonctionnement électrique, par exemple des moteurs, étant branchés sur la batterie pour utilisation mobile, et des organes de commande et/ou de contrôle électriques, caractérisé en ce que, lorsque le ou les électrolyte(s) ne sont pas en circulation, les moyens de travail étant débranchés électriquement, les organes de commande et/ou de contrôle sont également mis hors service et/ou en ce que, lorsque le ou les électrolyte(s) ne sont pas en circulation et que les moyens de travail sont débranchés électriquement, la batterie et/ou les paquets de cellules est/sont chargés au moins par moments.

2. Procédé selon la revendication 1, caractérisé en ce que l'électrolyte contenant l'anion oxydé, en particulier le brome, est placé par moments en circulation également lorsque les moyens de travail sont mis hors service.

3. Procédé selon la revendication 1 ou 2, caractérisé en ce que différentes pressions sont établies dans le circuit à anolytes et à catholytes.

4. Procédé selon la revendication 1 2 ou 3, caractérisé en ce que la pression maximale établie dans le circuit à anolytes et/ou catholytes est soumise à une commande.

5. Procédé selon l'une des revendications 1 à 4, caractérisé en ce que la pression établie dans le circuit à anolytes et/ou à catholytes est commandée en agissant sur la vitesse de rotation de pompes ou des moyens de travail.

6. Procédé selon l'une des revendications 1 à 5, caractérisé en ce que la pression régnant dans les conduites est commandée par des étranglements d'écoulement, servant le cas échéant simultanément de mélangeur statique du ou des circuits à électrolytes.

7. Procédé selon l'une des revendications 1 à 6, caractérisé en ce que, pour la mise à l'arrêt des moyens de travail, lorsque les batteries et/ou les paquets de cellules sont branchés électriquement en parallèle les uns des autres, la liaison électrique est interrompue au moins partiellement et le ou les circuits électrique(s) sont rétablis pour le fonctionnement des moyens de travail.

8. Procédé selon l'une des revendications 1 à 7, caractérisé en ce qu'un électrolyte pauvre en élément, molécule, et/ou combinaison active chimiquement, en particulier pauvre en brome, est introduit dans les enceintes à anolytes pour la mise à l'arrêt des moyens de travail.

9. Procédé selon l'une des revendications 1 à 8, caractérisé en ce que la liaison électrique des enceintes électrolytes par les conduites d'amenée et d'évacuation d'électrolytes est interrompue pour la mise à l'arrêt des moyens de travail.
